# EUROPEAN PATENT APPLICATION

(11) **EP 2 395 739 A2**
(43) Date of publication of application: **14.12.2011**
(21) Application number: 11169808.0
(22) Date of filing: 14.06.2011
(51) Int. Cl.: H04N 1/401, H04N 5/357

(54) **Apparatus and method for creating lens shading compensation table suitable for photography environment**

(30) Priority: 11.06.2010 KR 20100055603
(71) Applicant: SAMSUNG ELECTRONICS CO., LTD., Suwon-si Gyeonggi-do 442-742 (KR)
(72) Inventor: Lee, Jong-Hyub, 442-742 Gyeonggi-do (KR); Seo, Ja-Won, 442-742 Gyeonggi-do (KR); Lee, Hae-Sun, 442-742 Gyeonggi-do (KR); Yim, Sung-Jun, 442-742 Gyeonggi-do (KR)
(74) Representative: Grünecker, Kinkeldey, Stockmair & Schwanhäusser

(57) **Abstract**

An apparatus and a method for creating a lens shading compensation table suitable for a photography environment are provided. A photography environment condition determining unit determines photography environment conditions of an image input from a camera module. A compensation parameter detecting unit detects compensation parameters corresponding to the determined photography environment conditions. A compensation table creating unit creates a lens shading compensation table suitable for the determined photography environment conditions by applying the detected compensation parameters to a predetermined reference lens shading compensation table.

## Description

### BACKGROUND OF THE INVENTION

### 1. Field of the Invention

The present invention relates generally to an apparatus and method for creating a lens shading compensation table, and more particularly, to an apparatus and method for creating a lens shading compensation table suitable for various photography environments.

### 2. Description of the Related Art

A typical camera module includes an image sensor, a band-pass filter, and a lens system.

With the trend toward miniaturization of the camera module, the diameter of a lens decreases and the Chief Ray Angle (CRA) of the lens increases. Accordingly, the brightness of the edge of an image decreases as compared to the brightness of the center of the image, which is referred to as lens shading. The lens shading deepens with an increase in the sensor resolution and also deepens as the size of an incidence region decreases for increasing the depth.

The lens shading is compensated by changing an amplification factor according to the position of a sensor. A two-dimensional (2D) grid lookup table representing amplification factors to be compensated to reduce the lens shading is called a lens shading compensation table.

For example, if a lens shading compensation table for a 5M pixel image sensor with a resolution of 2592×1944 pixels includes a 42×32 grid 2D lookup table, a grid cell of the lens shading compensation table becomes a square with a size of 64×64 pixels. The lens shading compensation table is used to perform a lens shading compensation operation by various interpolations. A smoother interpolation is used if the grid cell of the lens shading compensation table is small in size.

The lens shading compensation uses a small number of lens shading compensation tables as compared to the image resolution. Therefore, the pixels between grids are interpolated by various interpolations, such as bilinear interpolation and B-spline interpolation, to prevent the occurrence of blocks.

The band-pass filter of the camera module passes a visible ray wavelength band and interrupts the remaining unnecessary wavelength bands. However, for the wavelength transmittance of the band-pass filter, the cutoff wavelength of a long-wavelength region moves by 20 to 30 nm as the incidence angle increases. Thus, a lens shading form changes according to the spectrum of an incident light source.

Because a lens shading compensation table for each RGB channel must change according to a change in the lens shading form, a plurality of lens shading compensation tables are created to perform lens shading compensation.

Also, a memory is used to store the created lens shading compensation tables, thus increasing the device price. Moreover, lens shading compensation tables must be created for various light sources, thus reducing the mass production efficiency.

### SUMMARY OF THE INVENTION

The present invention has been made to address at least the above problems and/or disadvantages and to provide at least the advantages described below. Accordingly, an aspect of the present invention provides an apparatus and method for creating a lens shading compensation table suitable for various photography conditions.

According to an aspect of the present invention, an apparatus is provided for creating a lens shading compensation table suitable for a photography environment. The apparatus includes a photography environment condition determining unit for determining photography environment conditions of an image input from a camera module, and a compensation parameter detecting unit for detecting compensation parameters corresponding to the determined photography environment conditions. The apparatus also includes a compensation table creating unit for creating a lens shading compensation table suitable for the determined photography environment conditions by applying the detected compensation parameters to a predetermined reference lens shading compensation table.

According to another aspect of the present invention, a method is provided for creating a lens shading compensation table suitable for a photography environment. Photography environment conditions of an image input from a camera module are determined. Compensation parameters corresponding to the determined photography environment conditions are detected. A lens shading compensation table suitable for the determined photography environment conditions is created by applying the detected compensation parameters to a predetermined reference lens shading compensation table.

### BRIEF DESCRIPTION OF THE DRAWINGS

The above and other aspects, features and advantages of the present invention will be more apparent from the following description when taken in conjunction with the accompanying drawings, in which:
FIG. 1 is a block diagram illustrating a photographing apparatus for creating a lens shading compensation table, according to an embodiment of the present invention;
FIG. 2 is a flow diagram illustrating a process for creating a lens shading compensation table suitable for photography environment conditions by the photographing apparatus, according to an embodiment of the present invention;
FIGs. 3A and 3B are flow diagrams illustrating a process for detecting photography environment conditions by a photography environment condition determining unit, according to an embodiment of the present invention;
FIGs. 4A and 4B illustrate a compensation parameter table predetermined by a compensation parameter detecting unit, according to an embodiment of the present invention;
FIG. 5 illustrates an automatic white balance curve for determining color temperature values corresponding to photography environment conditions detected according to an embodiment of the present invention; and
FIGs. 6A to 6C illustrate a process for creating a lens shading compensation table suitable for photography environment conditions by operating a reference lens shading compensation table and a calculated compensation parameter by a compensation table creating unit, according to an embodiment of the present invention.

### DETAILED DESCRIPTION OF EMBODIMENTS OF THE PRESENT INVENTION

Embodiments of the present invention are described in detail below with reference to the accompanying drawings. The same or similar components may be designated by the same or similar reference numerals. Det ailed descriptions of constructions or processes known in the art may be omitted to avoid obscuring the subject matter of the present invention.

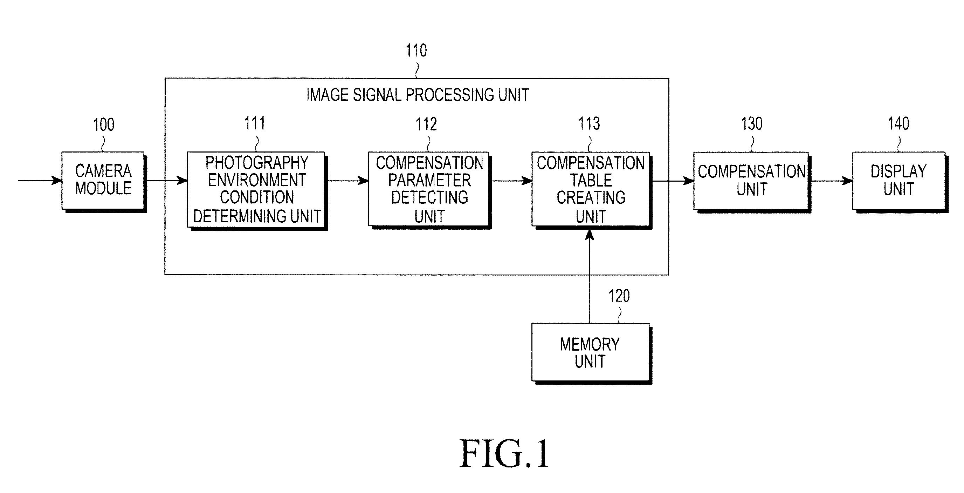

FIG. 1 is a block diagram illustrating a photographing apparatus for creating a lens shading compensation table, according to an embodiment of the present invention.

Referring to FIG. 1, a photographing apparatus includes a camera module 100, an image signal processing unit 110, a memory unit 120, a compensation unit 130, and a display unit 140. The image signal processing unit 110 includes a photography environment condition determining unit 111, a compensation parameter detecting unit 112, and a compensation table creating unit 113.

The camera module 100 processes optical signals, inputted through a lens, to output a Bayer image. The Bayer image is image data outputted through a Bayer color filter array of the camera module 100.

The image signal processing unit 110 detects photography environment conditions of the inputted Bayer image and creates a lens shading compensation table suitable for the detected photography environment conditions. The photography environment conditions may be data or information.

Specifically, the photography environment condition determining unit 111 detects the photography environment conditions of the inputted Bayer image by using detailed information about a light source for image photography. The detailed information about the light source may include at least one of time information, automatic exposure information, and automatic white balance information.

The compensation parameter detecting unit 112 detects compensation parameters for lens shading compensation by using the photography environment conditions detected by the photography environment condition determining unit 111. The compensation parameter detecting unit 112 predetermines a compensation parameter table including compensation parameter values of Red/Green/Blue (RGB) channels for lens shading compensation according to a plurality of photography environment conditions. The compensation parameter detecting unit 112 detects compensation parameters of RGB channels, corresponding to the detected photography environment conditions, from the predetermined compensation parameter table.

The compensation table creating unit 113 creates a lens shading compensation table suitable for a photography environment by applying the detected compensation parameters to a reference lens shading compensation table predetermined for lens shading compensation.

The memory unit 120 stores the reference lens shading compensation table predetermined for lens shading compensation.

The compensation unit 130 compensates the inputted image by using the lens shading compensation table created by the compensation table creating unit 113.

The display unit 140 displays the image compensated by the compensation unit 130.

Embodiments of the present invention create a lens shading compensation table reflecting various photography environments, thereby making it possible to create a lens shading compensation table suitable for various photography environments, without the need to prestore a plurality of lens shading compensation tables.

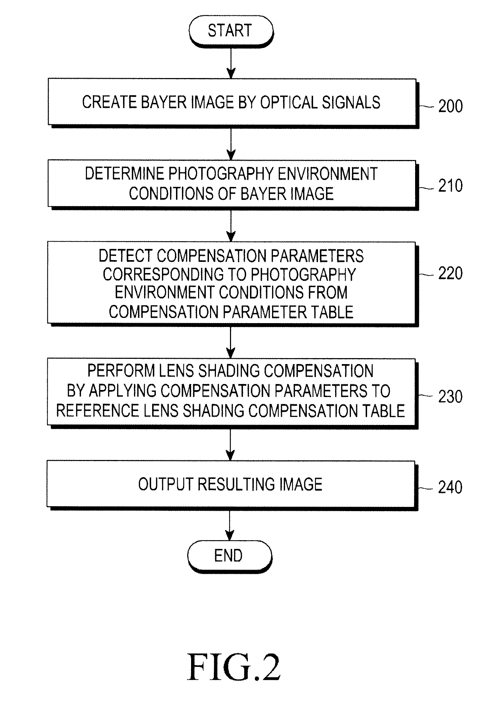

FIG. 2 is a flow diagram illustrating a process for creating a lens shading compensation table suitable for photography environment conditions by the photographing apparatus, according to an embodiment of the present invention.

Referring to FIG. 2, in step 200, the camera module 100 processes optical signals, inputted through a lens, to output a Bayer image.

In step 210, the photography environment condition determining unit I I I determines photography environment conditions of the Bayer image by using detailed light source information of the Bayer image. The photography environment conditions may vary according to a light source difference between indoor and outdoor places, an earth incidence angle of a solar light source, a seasonal subject variation, a spectrum variation according to season and time, a spectrum variation according to weather, and a difference in indoor illumination such as fluorescent lighting and incandescent lighting.

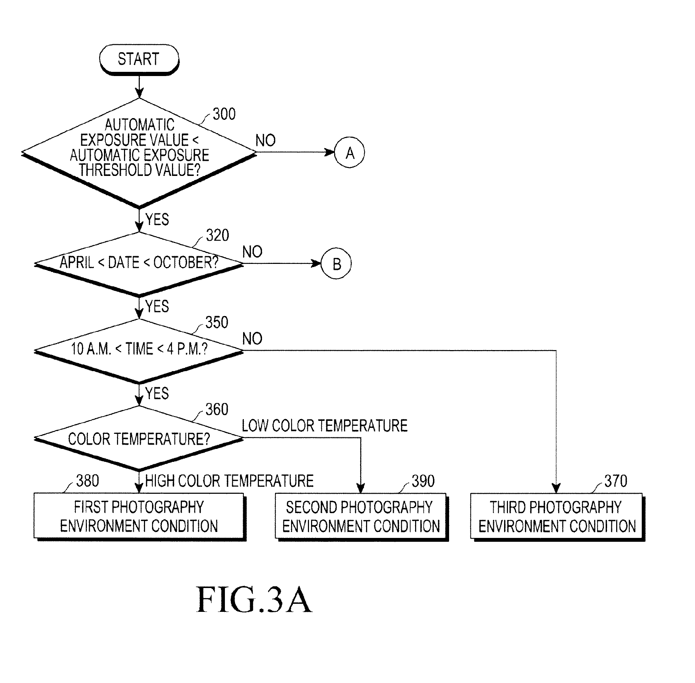

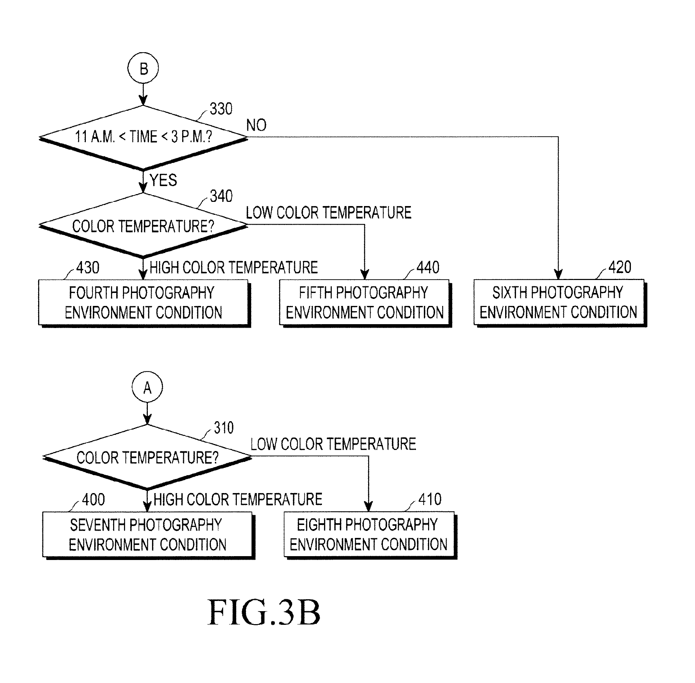

A process for determining the various photography environment conditions is described in greater detail below with reference to FIG. 3.

FIGs. 3A and 3B are flow diagrams illustrating a process for detecting photography environment conditions about a Bayer image by the photography environment condition determining unit 111, according to an embodiment of the present invention.

Referring to FIGs. 3A and 3B, in step 300, the photography environment condition determining unit 111 detects an automatic exposure value of the Bayer image and determines whether the detected automatic exposure value is less than a predetermined automatic exposure threshold value. If the detected automatic exposure value is less than the automatic exposure threshold value, the photography environment condition determining unit 111 proceeds to step 320; and if not, the photography environment condition determining unit 111 I proceeds to step 310 of FIG. 3B. The automatic exposure refers to the automatic control of an exposure of a film to light.

The automatic exposure value may be calculated in various ways. For example, the camera may calculate a brightness value of a photography environment by using an exposure time, an analog gain, and a digital gain. In an embodiment of the present invention, the automatic exposure value may be calculated as "Automatic Exposure Value = Exposure Time × Analog Gain × Digital Gain". In this case, if the photography environment is bright, the automatic exposure value is small; and if the photography environment is dark, the automatic exposure value is large.

In another embodiment of the present invention, the automatic exposure value may be calculated as "Automatic Exposure Value = 1/(Exposure Time × Analog Gain × Digital Gain)". In this case, if the photography environment is bright, the automatic exposure value is large; and if the photography environment is dark, the automatic exposure value is small.

In an embodiment of the present invention, it is assumed that the automatic exposure value is larger than the automatic exposure threshold value if the photography environment is bright. If the automatic exposure value is smaller than the automatic exposure threshold value, the photography environment condition determining unit 111 determines the photography environment to be an indoor environment. If the automatic exposure value is larger than the automatic exposure threshold value, the photography environment condition determining unit 111 I determines the photography environment to be an outdoor environment.

In step 320, the photography environment condition determining unit 111 determines whether the photography date is between April and October. If the photography date is between April and October, the photography environment condition determining unit 111 proceeds to step 350. If the photography date is not between April and October, the photography environment condition determining unit 111 proceeds to step 330 of FIG. 3B. Determining the photography date relates to a determination of the photography season, since the spectral distribution of light transmitted from the solar light source to the earth's surface varies as the altitude of the sun varies with the seasons. By determining whether the photography date is between April and October, the photograph environment condition determining unit 111 is able to discriminate between late spring and early autumn and between late autumn and early spring.

In step 350, the photography environment condition determining unit 111 determines whether the photography time is between 10 A.M. and 4 P.M. If the photography time is between 10 A.M. and 4 P.M., the photography environment condition determining unit 111 proceeds to step 360. If the photography time is not between 10 A.M. and 4 P.M., the photography environment condition determining unit 111 determines the photography environment condition to be a third photography environment condition in step 370. The photography time is determined because the spectral distribution of light transmitted from the solar light source to the earth's surface varies as the altitude of the sun varies with time.

In step 360, the photography environment condition determining unit 111 uses automatic white balance information to determine the color temperature value of a light source. If the color temperature value of the light source is larger than a predetermined color temperature threshold value, the photography environment condition determining unit 111 determines the photography environment condition to be a first photography environment condition with a high color temperature, in step 380. If the color temperature value of the light source is smaller than the predetermined color temperature threshold value, the photography environment condition determining unit 111 determines the photography environment condition to be a second photography environment condition with a low color temperature, in step 390. If the photography environment condition is determined to be a low color temperature, the photography environment condition determining unit I I 1 determines that the photography weather is clear. If the photography environment condition is determined to be a high color temperature, the photography environment condition determining unit 111 determines that the photography weather is cloudy. For example, if the color temperature ranges from about 2800 K to about 9000 K and the color temperature threshold value is about 5000 K, the color temperature of a cloudy day corresponds to about 6000 K and it may be determined to be a high color temperature. Also, the color temperature of sunset corresponds to about 4000 K and it may be determined to be a low color temperature._

In step 310 of FIG. 3B, the photography environment condition determining unit 111 determines the color temperature value of a light source. If the color temperature value of the light source is larger than a predetermined color temperature threshold value, the photography environment condition determining unit 111 determines the photography environment condition to be a seventh photography environment condition, in step 400. If the color temperature value of the light source is smaller than the predetermined color temperature threshold value, the photography environment condition determining unit 111 determines the photography environment condition to be an eighth photography environment condition, in step 410.

In step 330 of FIG. 3B, the photography environment condition determining unit 111 determines whether the photography time is between 11 A.M. and 3 P.M.

If the photography time is between 11 A.M. and 3 P.M., the photography environment condition determining unit I I I proceeds to step 340. If the photography time is not between 11 A.M and 3 P.M., the photography environment condition determining unit 111 determines the photography environment condition to be a sixth photography environment condition, in step 420.

In step 340, the photography environment condition determining unit 111 determines the color temperature value of a light source. If the color temperature value of the light source is larger than a predetermined color temperature threshold value, the photography environment condition determining unit 111 determines the photography environment condition to be a fourth photography environment condition in step 430. If the color temperature value of the light source is smaller than the predetermined color temperature threshold value, the photography environment condition determining unit 111 determines the photography environment condition to be a fifth photography environment condition, in step 440.

Embodiments of the present invention detect photography environment conditions varying according to a light source difference between indoor and outdoor places, thus making it possible to create a lens shading compensation table suitable for the detected photography environment conditions.

In another embodiment of the present invention, the compensation parameter detecting unit 112 may perform steps 310, 340 and 360 of determining the color temperature by using the automatic white balance information.

Referring again to FIG. 2, in step 220, the compensation parameter detecting unit 112 detects compensation parameters corresponding to the detected photography environment conditions, from a predetermined compensation parameter table.

Specifically, the compensation parameter detecting unit 112 predetermines a compensation parameter table including compensation parameters of RGB channels by using a normalized R channel gain (nrm_r) and a normalized B channel gain (nrm_b), specifically, automatic white balance information according to the photography environment conditions. The color temperature of a light source may be determined using the normalized R channel gain and the normalized B channel gain. For example, at low color temperatures corresponding to long-wavelength regions in a light source color temperature curve, the normalized R channel gain has large values and the normalized B channel gain has small values. At high color temperatures corresponding to short-wavelength regions in the light source color temperature curve, the normalized R channel gain has small values and the normalized B channel gain has large values.

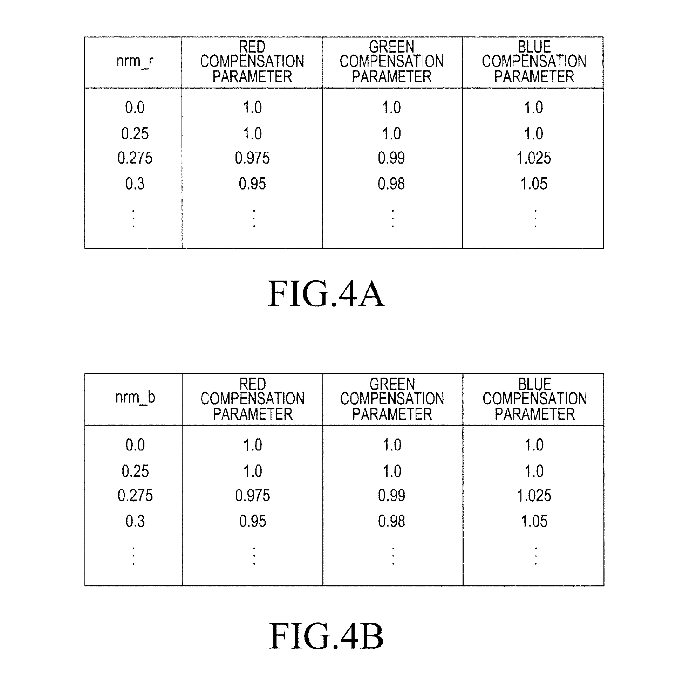

FIGS. 4A and 4B illustrate predetermined compensation parameter tables, according to an embodiment of the present invention. FIG. 4A is a table showing compensation parameters of each RGB channel corresponding to an nrm_r value, and FIG. 4B is a table showing compensation parameters of each RGB channel corresponding to an nrm_b value.

The compensation parameter detecting unit 112 searches for the nrm_r and nrm_b corresponding to the photography environment conditions detected from the predetermined compensation parameter table by the photography environment condition determining unit 111.

The compensation parameter detecting unit 112 detects compensation parameters of RGB channels corresponding to the searched nrm_r and nrm_b.

For example, if the nrm_r of automatic white balance information for Bayer image photography is approximately 0.275, the compensation parameter detecting unit 112 searches the predetermined compensation parameter table for channel-by-channel compensation parameters corresponding to a channel-by-channel nrm_r value of about 0.275. If there is no nrm_r value in the compensation parameter table, the compensation parameter detecting unit 112 detects compensation parameters by linear interpolation.

The compensation parameter detecting unit 112 calculates compensation parameters for each channel corresponding to an nrm_r value of about 0.275. Herein, the R channel compensation parameter is calculated at about 0.975. Also, the G channel compensation parameter is calculated at about 0.99, and the B channel compensation parameter is calculated at about 1.025.

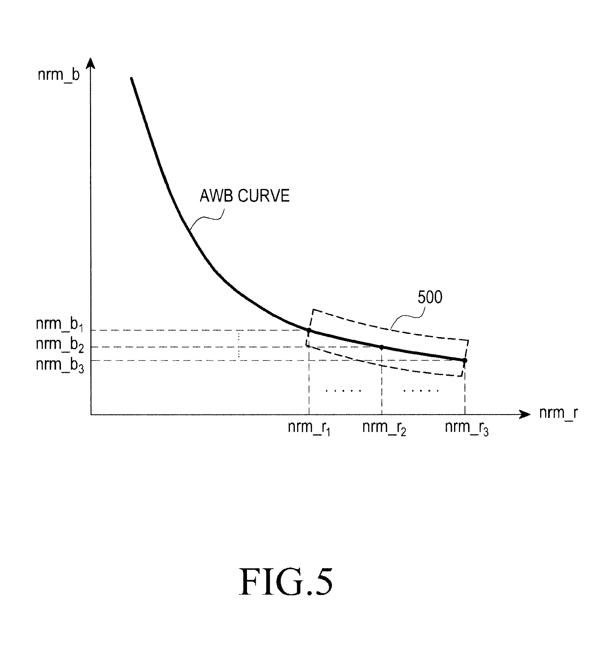

As illustrated in FIG. 5, the compensation parameter detecting unit 112 calculates an automatic white balance curve with respect to a normalized R channel gain and a normalized B channel gain detected in a certain photography environment. The compensation parameter detecting unit 112 also detects a plurality of normalized R channel gains and normalized B channel gains corresponding to a plurality of photography environment conditions in the calculated automatic white balance curve. The compensation parameter detecting unit 112 detects RGB compensation parameters corresponding to the normalized R channel gains and the normalized B channel gains, and creates a compensation parameter table.

For example, if a range of the normalized R channel gains and B channel gains corresponds to a reference numeral 500, the compensation parameter detecting unit 112 detects RGB compensation parameters corresponding to the normalized R channel gains and the normalized B channel gains, and creates a compensation parameter table.

Thereafter, the compensation parameter detecting unit 112 detects RGB compensation parameters corresponding to the detected photography environment conditions, from the created compensation parameter table.

Referring again to FIG. 2, in step 230, the compensation table creating unit 113 creates a lens shading compensation table suitable for a photography environment by applying the RGB channel compensation parameters, detected by the compensation parameter detecting unit 112, to the stored reference lens shading compensation table. The compensation unit 130 performs a lens shading compensation operation by using the created lens shading compensation table.

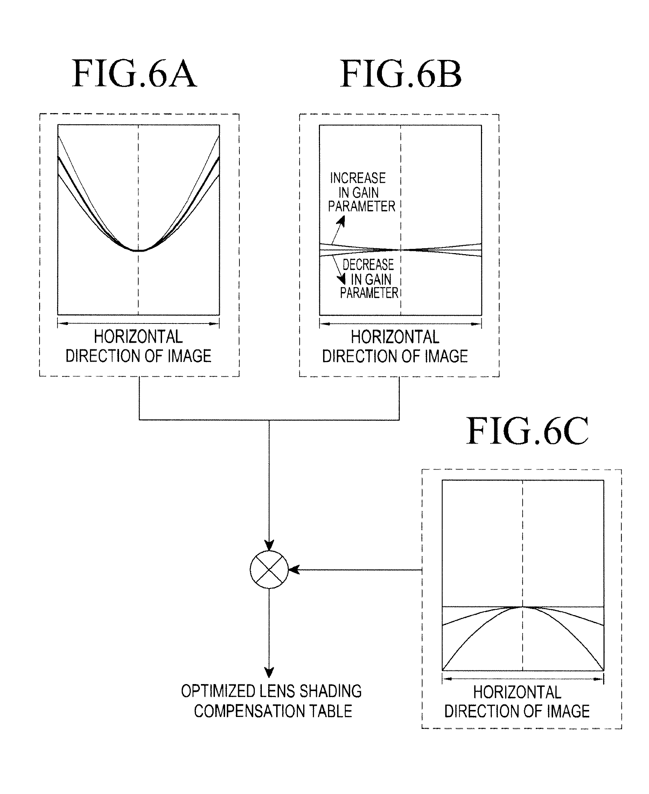

Step 230 is described in greater detail below with reference to FIGS. 6A to 6C.

FIGS. 6A to 6C illustrate a process for creating a lens shading compensation table suitable for photography environment conditions by operating the reference lens shading compensation table and the calculated compensation parameters by the compensation table creating unit 113, according to an embodiment of the present invention.

FIG 6A is a graph showing the distribution of RGB channel shading gains in the horizontal direction of an image by the reference lens shading compensation table. FIG. 6B is a graph showing the distribution of RGB channel compensation parameters for a Bayer image in the horizontal direction of an image.

The compensation table creating unit 113 creates a lens shading compensation table optimized for the photography environment conditions, by multiplying the RGB compensation parameter values and the RGB channel table values of the reference lens shading compensation table so that the brightness is uniform in the horizontal direction of an image. As illustrated in FIG. 6C, the compensation table creating unit 113 may also multiply the RGB channel compensation level values for more natural lens shading compensation.

The compensation unit 130 compensates the inputted image by using the lens shading compensation table created by the compensation table generating unit 113.

Referring again to FIG. 2, in step 240, the display unit 140 displays the compensated image. Thereafter, the lens shading compensation table creating process is completed.

Through this process, a lens shading compensation table is created for lens shading compensation in each frame.

As described above, the lens shading compensation table creating apparatus according to the present invention detects the photography environment conditions of an image photographed by the user, detects the compensation parameters corresponding to the detected photography environment conditions, applies the detected compensation parameters to the reference lens shading compensation table values, and creates a lens shading compensation table optimized for the photography environment conditions, thus making it possible to obtain the optimum images in various environments.

While the invention has been shown and described with reference to certain embodiments thereof, it will be understood by those skilled in the art that various changes in form and detail may be made therein without departing from the spirit and scope of the invention as defined by the appended claims.

## Claims

1. An apparatus for creating a lens shading compensation table suitable for a photography environment, comprising:
a photography environment condition determining unit (111) for determining photography environment conditions of an image input from a camera module;
a compensation parameter detecting unit (112) for detecting compensation parameters corresponding to the determined photography environment conditions; and
a compensation table creating unit (113) for creating a lens shading compensation table suitable for the determined photography environment conditions by applying the detected compensation parameters to a predetermined reference lens shading compensation table.

2. The apparatus of claim 1, wherein the photography environment condition determining unit (111) determines the photography environment conditions by using at least one of time information, automatic exposure information, and automatic white balance information about a light source used in photographing the image.

3. The apparatus of claim 1, wherein the photography environment condition determining unit (111) determines the photography environment conditions in accordance with a light source difference between indoor and outdoor places, an earth incidence angle of a solar light source, a seasonal subject variation, a spectrum variation according to season and time, a spectrum variation according to weather, and a difference in indoor illumination.

4. The apparatus of claim 1, wherein the compensation parameter detecting unit (112) predetermines a compensation parameter table including RGB channel compensation parameters.

5. The apparatus of claim 4, wherein the compensation parameter detecting unit (112) detects RGB channel compensation parameters, corresponding to a normalized value of at least one color channel gain for the detected photography environment conditions, from the predetermined compensation parameter table.

6. The apparatus of claim 1, wherein the compensation parameter detecting unit (112) detects at least one normalized color channel gain corresponding to a plurality of photography environment conditions by using automatic white balance information, creates a compensation parameter table including compensation parameters corresponding to the detected normalized color channel gain, and detects RGB channel compensation parameters, corresponding to at least one color channel gain for the detected photography environment conditions, from the created compensation parameter table.

7. The apparatus of claim 1, wherein the compensation table creating unit ()113 applies the detected compensation parameters to the predetermined reference lens shading compensation table for lens shading compensation.

8. The apparatus of claim 1, further comprising a compensation unit (130) for compensating the inputted image by using the created lens shading compensation table.

9. A method for creating a lens shading compensation table suitable for a photography environment, comprising the steps of:
determining photography environment conditions of an image input from a camera module;
detecting compensation parameters corresponding to the determined photography environment conditions; and
creating a lens shading compensation table suitable for the determined photography environment conditions by applying the detected compensation parameters to a predetermined reference lens shading compensation table.

10. The method of claim 9, wherein the photography environment conditions are determined using at least one of time information, automatic exposure information, and automatic white balance information about a light source used in photographing the image.

11. The method of claim 9, wherein the photography environment conditions are determined in accordance with a light source difference between indoor and outdoor places, an earth incidence angle of a solar light source, a seasonal subject variation, a spectrum variation according to season and time, a spectrum variation according to weather, and a difference in indoor illumination.

12. The method of claim 9, wherein detecting the compensation parameters comprises:
predetermining a compensation parameter table including RGB channel compensation parameters; and
detecting RGB channel compensation parameters, corresponding to a normalized value of at least one color channel gain for the detected photography environment conditions, from the predetermined compensation parameter table.

13. The method of claim 9, wherein detecting the compensation parameters comprises:
detecting at least one normalized color channel gain corresponding to a plurality of photography environment conditions by using automatic white balance information;
creating a compensation parameter table including compensation parameters corresponding to the detected normalized color channel gain; and
detecting RGB channel compensation parameters, corresponding to at least one color channel gain for the detected photography environment conditions, from the created compensation parameter table.

14. The method of claim 9, wherein creating the lens shading compensation table comprises applying the detected compensation parameters to the predetermined reference lens shading compensation table for lens shading compensation.

15. The method of claim 9, further comprising compensating the inputted image by using the created lens shading compensation table.
